# EUROPEAN PATENT APPLICATION

(11) **EP 4 626 041 A1**
(43) Date of publication of application: **01.10.2025**
(21) Application number: 25165524.7
(22) Date of filing: 24.03.2025
(51) Int. Cl.: H04S 7/00, G10K 15/02

(54) **SYSTEM AND METHOD FOR ENHANCING IN-VEHICLE ACOUSTIC EXPERIENCE**

(30) Priority: 25.03.2024 CN 202410348880
(71) Applicant: Harman International Industries, Inc., Stamford, Connecticut 06901 (US)
(72) Inventor: XIANG, Pei, Stamford, CT, 06901 (US); LI, Kai, Stamford, CT, 06901 (US); YANG, Jue, Stamford, CT, 06901 (US)
(74) Representative: Westphal, Mussgnug & Partner, Patentanwälte mbB

(57) **Abstract**

A system and method for enhancing in-vehicle acoustic experience, including obtaining and transmitting sensor data by a sensor module; receiving the sensor data by a soundscape generation module and generating a soundscape audio signal with reference to the sensor data; and then playing, by at least one speaker in the in-vehicle space, a mixed audio signal formed by mixing the generated soundscape audio signal with the audio source signal provided by an in-vehicle entertainment module, so as to enhance the in-vehicle acoustic experience without affecting driving, thereby helping drivers and passengers relax and improve focus, enjoying immersive acoustic experiences while further masking noise.

## Description

### TECHNICAL FIELD

The present invention relates to the field of audio processing, and more specifically, to a system and method for enhancing in-vehicle acoustic experience.

### BACKGROUND

The sound generated in cars is usually limited to alarm and parameter instrument prompt tones. Except for music and radio from an entertainment system, all other sounds are passively transmitted from car horns based on road conditions. So far, it is not common to immerse oneself in the sound of the surrounding environment in a car, but if synthesized properly, it may be very beneficial.

For example, when people are driving on a highway in a national park, they may experience the whistling of trees outside the window, but those inside the car can only hear the noise of tires and the road. Even if you stop the car and roll down the window, the forest itself may sound boring. But it can be imagined that if one can immerse themselves in a "soundscape of a forest with bird singing" that is similar to cinema level environmental sound while enjoying the view, then this experience would be perfect. The same design is also applicable, for example, when parking by the beach and enjoying the scenery from inside the car, a specific soundscape experience can change the fact that the seaside itself may not sound "good" enough, allowing people to enjoy the sound of sunny beaches and scenery while avoiding the sea breeze.

Therefore, in order to resolve the above problem, a system and method for enhancing in-vehicle acoustic experience without affecting driving needs to be provided, so as to enhance the in-vehicle acoustic experience without affecting driving, thereby helping people in the car relax and improve focus, enjoying immersive acoustic experiences while further masking noise.

### SUMMARY OF THE INVENTION

According to an aspect of the present disclosure, a system for enhancing in-vehicle acoustic experience is provided. The system for enhancing in-vehicle acoustic experience includes a sensor module, an in-vehicle entertainment module, and a soundscape generation module. The sensor module includes an interior sensor and an exterior sensor respectively configured for acquiring sensor data. The in-vehicle entertainment module is configured to provide an audio source signal. The soundscape generation module is configured to receive sensor data from a sensor module and generate a soundscape audio signal with reference to the sensor data. The system for enhancing in-vehicle acoustic experience further incudes at least one speaker, where the at least one speaker is configured to play a mixed audio signal formed by mixing the generated soundscape audio signal with the audio source signal.

According to another aspect of the present disclosure, a method for enhancing in-vehicle acoustic experience. Steps of the method for enhancing in-vehicle acoustic experience include obtaining, by a sensor module, sensor data and transmitting the sensor data to a soundscape generation module; and providing, via an in-vehicle entertainment module, an audio source signal. Then, a soundscape generation module receives the sensor data from the sensor module, and generates a soundscape audio signal with reference to the sensor data. The steps of the method for enhancing in-vehicle acoustic experience further include playing, by at least one speaker, a mixed audio signal formed by mixing the generated soundscape audio signal with the audio source signal.

### BRIEF DESCRIPTION OF THE DRAWINGS

After reading the following detailed description with reference to the accompanying drawings, these and/or other features, aspects, and advantages of the present invention will be better understood throughout these figures, where the same characters represent the same components, in which:
FIG. 1 shows a schematic structural block diagram of a system for enhancing in-vehicle acoustic experience according to one or more embodiments of the inventive subject matter;
FIG. 2 shows a schematic flowchart of a method for enhancing in-vehicle acoustic experience according to one or more embodiments of the inventive subject matter; and
FIG. 3 shows an exemplary scene for enhancing in-vehicle acoustic experience based on safety considerations according to one or more embodiments of the inventive subject matter.

### DETAILED DESCRIPTION

Descriptions of various embodiments are described below for illustrative purposes, but are not intended to be exhaustive or limit the disclosed embodiments. Many modifications and variations will be apparent to those skilled in the art without departing from the scope and spirit of the described embodiments.

The inventive subject matter is to provide a system for enhancing in-vehicle acoustic experience, creating immersive soundscapes through rendering methods and applying them to a multi-channel sound system in vehicles to enhance the in-vehicle acoustic experience. The benefits of doing so include allowing for enhancing the in-vehicle acoustic sightseeing experience, helping drivers stay relaxed and focused, and being able to mask residual road noise generated by passive noise reduction. The following content of the present disclosure will describe the generation of truly immersive soundscapes and their integration into sound systems in driving scenarios. For simplicity, the term 'car' in this article can refer to all vehicles without being limited to their specific forms.

Soundscapes are sounds or combinations of sounds formed or generated by immersive environments. In order to relax or concentrate, various soundscape materials can be designed or selected for sound masking settings or enhancing audio experience in space, thereby enabling people to achieve good acoustic perception.

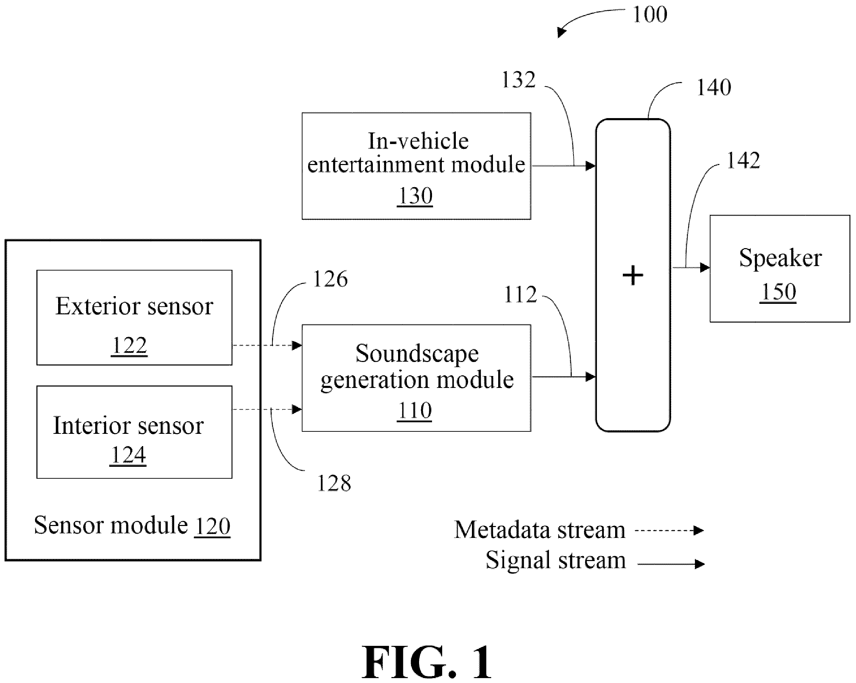

FIG. 1 shows a schematic structural block diagram 100 of a system for enhancing in-vehicle acoustic experience according to one or more embodiments of the inventive subject matter. The system for enhancing in-vehicle acoustic experience includes a soundscape generation module 110 for generating an immersive soundscape. The soundscape generation module 110 can be configured to receive sensing information from a sensor module 120. The sensor module 120 can include an exterior sensor 122 and an interior sensor 124 of the vehicle. The exterior sensor 122 can be arranged outside the vehicle, for example, located around the vehicle body, above the roof, and at the wheels of the vehicle. The exterior sensor 122 can include, but is not limited to an exterior camera, an exterior microphone, a windshield sensor, a speedometer, a GPS sensor, and a proximity sensor. The interior sensor 124 can be arranged inside the vehicle, for example, located on the dashboard, vehicle seats, the roof, etc. The interior sensor 124 can include but is not limited to an interior camera and an interior microphone. The interior sensor and the exterior sensor send the sensor data (such as sensed sensor data, weather data, environmental data, etc.) to a soundscape generation module 110 in the form of metadata streams 126 and 128, respectively. The soundscape generation module 110 will refer to as much of the sensor data as possible (including both interior and exterior sensors) to generate soundscapes. The soundscape generation module 110 will send the generated soundscape 112 through a signal stream.

In addition, the system for enhancing in-vehicle acoustic experience further includes an in-vehicle entertainment module 130, which, for example, can be implemented in existing audio devices of the vehicle or anywhere in the vehicle. The in-vehicle entertainment module 130 can provide audio sources such as various music, movies, broadcasts, navigation, prompt sounds, alarm sounds, etc. The in-vehicle entertainment module 130 will send various audio signals 132 through a signal stream.

The generated soundscape sent by the soundscape generation module 110 is mixed with an audio signal from the in-vehicle entertainment module 130, for example, in a mixing unit 140, and then sent to a speaker 140 to play the mixed audio inside the vehicle. The speaker 140 can include, for example, a multi-channel speaker system to play a mixed audio signal 142. The mixed audio signal 142 includes the generated soundscape 112 from the soundscape generation module 110 and various audio signals 132 from the in-vehicle entertainment module 130. The mixed audio signal 142 can be a mono or multi-channel stereo audio signal, which can be played in the vehicle through the corresponding channel in the multi-channel speaker system of speaker 140, forming an enhanced immersive surrounding sound and achieving an enhanced acoustic experience as if in a cinema environment.

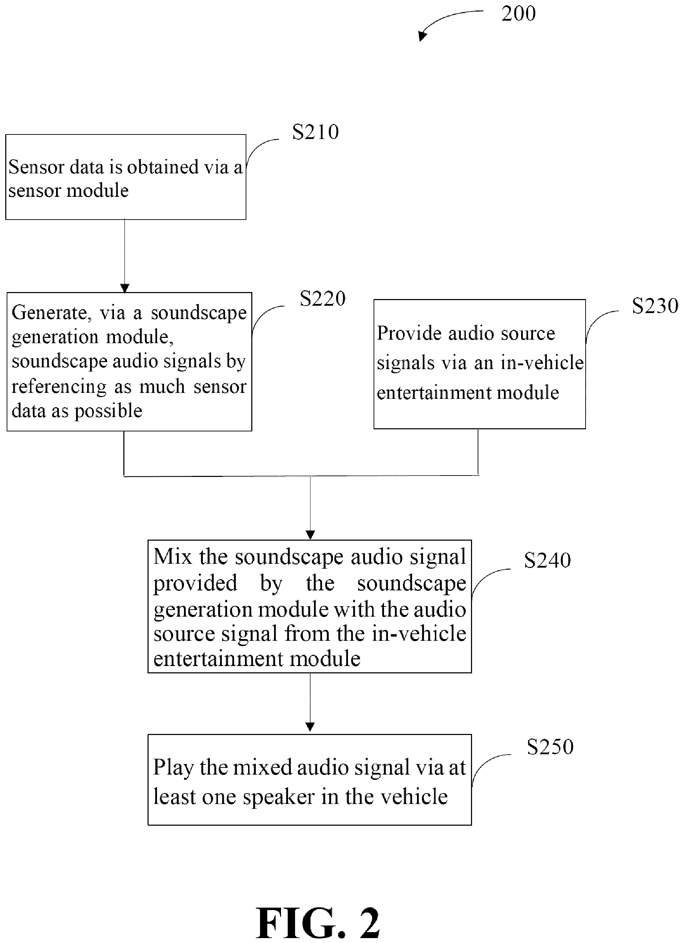

FIG. 2 shows a schematic flowchart 200 of a method for enhancing in-vehicle acoustic experience according to one or more embodiments of the inventive subject matter. As shown in FIG. 2, on one hand, in a step S210, in a method for enhancing in-vehicle acoustic experience, firstly, sensor data is obtained via a sensor module, and the sensor module can include an exterior sensor and an interior sensor. The exterior sensor can capture the sensor data from the surrounding environment. For example, an exterior camera can capture image data of the surrounding environment, enabling image analysis in subsequent processing to identify exterior views such as the ocean. For example, an exterior microphone can capture interesting sounds so as to re-present in the car after removing wind noise. For example, a windshield sensor can sense that it is currently raining so as to play a beautified rain sound inside the car, and can also add thunder based on the rainfall in the windshield sensor data. In addition, the speedometer can collect the vehicle speed and adjust the noise level so that the in-vehicle audio is sufficient to mask road noise. The GPS sensor can obtain the current location and convert the local weather and attractions into sound. Moreover, the in-vehicle sensor can detect fatigue and energy dispersion of the driver, for example, through interior cameras. In addition to playing alarm sounds, the wake-up audio can also be synthesized. In addition, for example, the in-vehicle microphone can record arguments between drivers and passengers, creating a soundscape of waves crashing against the shore to calm the unfriendly atmosphere.

In a step S220, the sensor data obtained by the sensor can be sent to a soundscape generation module. The soundscape generation module will be able to generate soundscapes by referencing as many vehicle sensor signals as possible. For example, thunder and rain at different times and/or spaces, sounds of waves, bird songs, insect songs, wind blowing on leaves, etc. that are recorded multiple times. The generation of soundscapes can come from various sound source materials, or can be pieced together through synthesis or AI generation engines. The soundscape generation module can refer to these factors for processing, extract directly from some existing music libraries, or use further algorithms such as audio retrieval to calculate and obtain soundscapes.

Specifically, the soundscape generation module can select some similar but different sound materials from multiple sound materials, respectively recording, for example, their sound pressure levels, sound densities, orientations, matching speeds, and sound distances, etc., in order to design and form sound elements for different scenarios. In other words, each sound element can be a series of similar but different sound materials, each of which can also include its own unique attribute parameters. The sound elements generated for different scenarios can have randomness. For example, the basic volume, volume fluctuations, etc. of each sound element can be randomized to make the overall sound close to white noise in energy and spatial distribution, so it does not sound like a pre-recorded audio track.

In some examples, in the design of soundscapes, the attribute parameters of sound elements can be randomly controlled, such as randomly controlling the trigger density, randomly selecting sound materials, and randomly changing the initial position and spatial movement speed (Doppler effect) of each sound element in space. In some other examples, the distance of sound elements can also be controlled and randomized through mixing methods such as dry/wet ratio and reverberation, as well as combining with the volume. The multi-layered mixing of such sound elements will result in a constantly changing, never repeating, and overall energy stable soundscape.

In summary, for different scenarios that vehicles pass through while driving, the key lies in using information obtained from sensors available in modern cars and identifying suitable sound elements for generating enhanced soundscapes. This requires configuring the processor to perform intelligent judgment, matching mechanisms, and fine-tuning to create soundscapes with enhanced immersive effects. At the same time, according to the design principles of game audio, for example, the number of sound elements that appear simultaneously in the soundscape generated by the same scene should not exceed 6.

On the other hand, in a step S230, an in-vehicle entertainment module can provide an audio source signal. As stated above, the audio sources provided by the in-vehicle entertainment module can include various types of music, movies, broadcasts, navigation, alert sounds, alarm sounds, etc. In some examples, the audio source can also be obtained through other means, for example, for a specific scene, a system that enhances the in-vehicle acoustic experience can return to the in-vehicle entertainment module, search for songs or audio lists to find an audio source that perfect matches the current soundscape, so that users can enjoy a complete feast of acoustic experience.

Subsequently, in a step S240, the soundscape generated by the soundscape generation module is mixed with the audio source provided by the in-vehicle entertainment module. In some examples, the generated soundscape can be used as the foreshadowing sound based on design and sound categories and then can be used as a "sound bed", and can be mixed with audio sources provided by the in-vehicle entertainment module. The mixed sound can be played in space (such as vehicles), and the soundscape used as a sound bed in the mixed audio can be compared to more obvious and prominent sound objects, such as multiple sound objects that are independently rendered (such as placing these sound objects in different orientations). **In** this way, various acoustic experiences can be created, such as "enjoying the song 'Knight in the Storm' in the soundscape of rainy days", for example, "enjoying the song *'Señorita'* on a virtual beach," or "listening to Chopin's 'Nocturne' on the night road".

The final mixed sound, whether it is mono, stereo, or multi-channel audio, can include at least a mixture of sounds from two parts, i.e., the audio source and the soundscape. For example, to provide users with truly immersive experience, the mixed sound is usually mixed in a multi-channel manner and can be played in the vehicle through multiple in-vehicle speakers, for example. For example, the mixed sound can be played by a multi-channel speaker system, and there are at least two multi-channel speaker systems. Generally, there are 4 or more speakers; For example, mixed sounds can be played through a virtual multi-channel speaker system. For example, each sound element can be arranged at a corresponding virtual position in the 2D or 3D direction by using algorithms such as Vector Amplitude Shift (VBAP) based on the known respective orientations of the speakers' channels.

Some possible implementation logics based on sensors according to one or more embodiments of the inventive subject matter are described in the following text: for example, based on the analysis of image data collected by exterior cameras, the exterior view is identified as the ocean, a sound generation module begins to mix the sound of waves and seagulls; for example, based on the image captured by the exterior camera, it detects that the car is driving in the forest, and then the sound generation module begins to mix the noise of bird songs, insect sounds, and wind blowing on the trees; for example, an exterior microphone captures interesting sounds, and after removing wind noise, the sound is re-presented inside the car, thereby cleaning up and amplifying the exterior sound; for example, a windshield sensor detects that it is raining, and then a beautified rain sound will be played inside the car, and thunder can be added based on the rainfall in the data of the windshield sensor; for example, the speedometer collects the driving speed of the vehicle and estimates a certain road noise level, and then adjusts the soundscape volume so that its sound is enough to cover up unwanted road noise; for example, the GPS sensor reports the location of the car and converts the local weather and attractions into soundscapes according to the location; for another example, if the interior camera detects that the user is very tired, in addition to playing an alarm sound, it can also notify the soundscape generation module to synthesize wake-up sounds, such as high pitched radio environments, insect calls, etc., to keep the user awake and alert; and for example, the in-vehicle microphone records the argument between the driver and passengers, and then the soundscape turns into the sound of waves crashing against the shore, just to calm the unfriendly atmosphere.

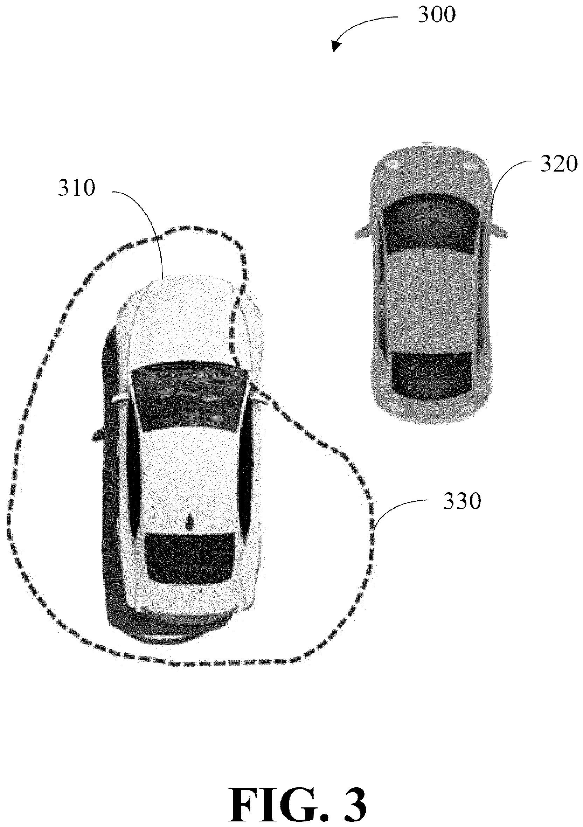

Furthermore, the system for enhancing acoustic experience of the inventive subject matter can also incorporate more consideration factors. FIG. 3 shows an exemplary scene 300 for enhancing in-vehicle acoustic experience based on safety considerations according to one or more embodiments of the inventive subject matter. In this example, when a proximity sensor of a vehicle 310 detects another vehicle 320 or obstacle worth the driver's attention in the vicinity of the vehicle 310, the soundscape in that direction/position will be muted, providing sufficient silence area for visually and acoustically high priority events. As shown in FIG. 3, an area 330 circled by the dashed line represents an acoustic coverage area of the soundscape generated by the system for enhancing in-vehicle acoustic experience in the vehicle 310. It can be seen that the area 330 does not cover the soundscape in the direction of the vehicle 310 pointing towards another vehicle 320, meaning that the soundscape is silent in this direction so that the driver can easily hear sounds such as another vehicle 320 from that direction. This can avoid security issues caused by excessive sound masking and prevent users from losing attention to important information.

The in-vehicle immersive soundscape generation system and method provided by the inventive subject matter can be applied to, for example, in-vehicle audio products and speaker products for car after-sales.

Based on the above, a description of the implementation solutions has been presented for the purpose of illustration and description. Based on the above description, appropriate modifications and changes can be made to the implementation solutions, or these modifications and changes can be obtained from practicing the method. For example, unless otherwise specified, one or more of the described methods may be performed by suitable apparatuses and/or a combination of apparatuses. The method can be executed by combining one or more logic devices (e.g. processors) with one or more additional hardware elements (such as storage apparatuses, memories, hardware network interfaces/antennas, switches, actuators, clock circuits, etc.) to execute stored instructions. In addition to the order described in this application, the described methods and associated actions can also be executed in parallel and/or simultaneously in various orders. The described system is essentially exemplary and may include additional elements and/or omit elements. The subject matter of the inventive subject matter includes all novel and non-obvious combinations of the disclosed systems and configurations, as well as other features, functions, and/or properties.

The elements of various real-time solutions of modules, elements, and components used to implement the methods provided by the inventive subject matter can be manufactured as one or more electronic devices residing on the same chip or chipset, including but not limited to fixed or programmable logic element (such as transistors or gates) arrays. One or more elements of the various implementation solutions of the devices described in this article can also be fully or partially implemented as one or more instruction sets, which can be arranged to be executed on one or more fixed or programmable logic element arrays (such as microprocessors, embedded processors, IP cores, digital signal processors, FPGAs, ASSPs, ASICs, etc.).

The following clauses describe examples of one or more embodiments of the inventive subject matter.

Clause 1. A system for enhancing in-vehicle acoustic experience, comprising:
a sensor module, configured to obtain and transmit sensor data;
an in-vehicle entertainment module, configured to provide an audio source signal;
a soundscape generation module, configured to:
   receive the sensor data from the sensor module;
   generate a soundscape audio signal with reference to the sensor data; and
   at least one speaker, configured to play a mixed audio signal formed by mixing the generated soundscape audio signal with the audio source signal.

Clause 2. The system according to clause 1, wherein generating the soundscape audio signal with reference to the sensor data comprises:
analyzing the sensor data to determine a scene, thereby selecting a plurality of sound materials for the scene and generating at least one sound element; and
randomizing and fusing in-layers the at least one sound element, so as to generate the soundscape audio signal.

Clause 3. The system according to clause 1 or 2, wherein randomizing the at least one sound element comprises randomly controlling one or more of the following:
basic volume and volume fluctuation;
trigger density;
random sound material selection;
an initial position in space and a spatial movement speed/Doppler effect; and
an interval distance.

Clause 4. The system according to any one of clauses 1 to 3, wherein the at least one speaker comprises a multi-channel speaker, and each of the at least one sound element is arranged at a corresponding virtual location in the 2D or 3D direction based on the known channel orientation of the multi-channel speaker.

Clause 5. The system according to any one of clauses 1 to 4, wherein the mixed audio signal comprises at least two channels, which are respectively played through corresponding channels of the multi-channel speaker.

Clause 6. The system according to any one of clauses 1 to 5, wherein the audio source signal comprises at least one of music, movies, broadcasts, navigations, prompt tones and alarm tones.

Article 7. The system according to any one of clauses 1 to 6, wherein the sensor module comprises:
at least one interior sensor for acquiring sensor data inside the vehicle; and
at least one exterior sensor for acquiring sensor data outside the vehicle.

Clause 8. The system according to any one of clauses 1 to 7, wherein the at least one interior sensor comprises at least one of an interior camera and an interior microphone.

Clause 9. The system according to any one of clauses 1 to 8, wherein the at least one exterior sensor comprises at least one of an exterior camera, an exterior microphone, a windshield sensor, a GPS sensor, a speedometer and a proximity sensor.

Clause 10. The system according to any one of clauses 1 to 9, wherein, based on an approaching vehicle or obstacle detected via the proximity sensor, the soundscape audio signal in the direction/position towards the vehicle or obstacle is muted.

Clause 11. A method for enhancing in-vehicle acoustic experience, comprising following steps:
obtaining and transmitting, by a sensor module, sensor data;
providing, via an in-vehicle entertainment module, an audio source signal;
receiving, by a soundscape generation module, the sensor data from the sensor module, and generating a soundscape audio signal with reference to the sensor data; and
playing, by at least one speaker, a mixed audio signal formed by mixing the generated soundscape audio signal with the audio source signal.

Clause 12. The method according to clause 11, wherein generating the soundscape audio signal with reference to the sensor data comprises the following steps:
analyzing the sensor data to determine a scene, thereby selecting a plurality of sound materials for the scene and generating at least one sound element; and
randomizing and fusing in-layers the at least one sound element, so as to generate the soundscape audio signal.

Clause 13. The method according to clause 11 or 12, wherein randomizing the at least one sound element further comprises a step of randomly controlling one or more of the following:
basic volume and volume fluctuation;
trigger density;
random sound material selection;
an initial position in space and a spatial movement speed/Doppler effect; and an interval distance.

Clause 14. The method according to any one of clauses 11 to 13, wherein the at least one speaker comprises a multi-channel speaker, and each of the at least one sound element is arranged at a corresponding virtual location in the 2D or 3D direction based on the known channel orientation of the multi-channel speaker.

Clause 15. The method according to any one of clauses 11 to 15, wherein the mixed audio signal comprises at least two channels, which are respectively played through corresponding channels of the multi-channel speaker.

Clause 16. The method according to any one of clauses 11 to 15, wherein the audio source signal comprises at least one of music, movies, broadcasts, navigations, prompt tones and alarm tones.

Clause 17. The method according to any one of clauses 11 to 16, wherein the plurality of sensors comprise:
at least one interior sensor for acquiring sensor data inside the vehicle; and
at least one exterior sensor for acquiring sensor data outside the vehicle.

Clause 18. The method according to any one of clauses 11 to 17, wherein the at least one interior sensor comprises at least one of an interior camera and an interior microphone.

Clause 19. The method according to any one of clauses 11 to 18, wherein the at least one exterior sensor comprises at least one of an exterior camera, an exterior microphone, a windshield sensor, a GPS sensor, a speedometer and a proximity sensor.

Clause 20. The method according to any one of clauses 11 to 19, further comprising muting, based on an approaching vehicle or obstacle detected via a proximity sensor, the soundscape audio signal in the direction/position towards the vehicle or obstacle.

Clause 21. A non-volatile computer-readable medium storing instructions, wherein the instructions, when executed by one or more processors, cause the one or more processors to execute the method according to any one of clauses 11 to 20.

The terms used in this article are chosen to best explain the principles of the embodiments, practical applications, or improvements to technologies discovered in the market, or to enable those of ordinary skills in the art to understand the embodiments disclosed in this text.

In the above text, the embodiments presented in this disclosure have been referenced and identified. However, the scope of this disclosure is not limited to the specific described embodiments. On the contrary, any combination of the aforementioned features and elements, whether or not involving different embodiments, is envisioned as implementing and practicing the envisioned embodiments.

In addition, although the embodiments disclosed in this article may achieve advantages over other possible solutions or over existing technologies, the scope of this disclosure is not limited regardless of whether a given embodiment achieves specific advantages. Therefore, the aforementioned aspects, features, embodiments, and advantages are illustrative only and are not considered elements or limitations of the appended claims unless explicitly stated in the claims.

Although the above content pertains to the embodiments of this disclosure, other and further embodiments of this disclosure may be designed without departing from the basic scope of this disclosure, and the scope of this disclosure is determined by the appended claims.

## Claims

1. A system for enhancing in-vehicle acoustic experience, comprising:
a sensor module, configured to obtain and transmit sensor data;
an in-vehicle entertainment module, configured to provide an audio source signal;
a soundscape generation module, configured to:
receive the sensor data from the sensor module;
generate a soundscape audio signal with reference to the sensor data; and
at least one speaker, configured to play a mixed audio signal formed by mixing the generated soundscape audio signal with the audio source signal.

2. The system according to claim 1, wherein generating the soundscape audio signal with reference to the sensor data comprises:
analyzing the sensor data to determine a scene, thereby selecting a plurality of sound materials for the scene and generating at least one sound element; and
randomizing and fusing in-layers the at least one sound element, so as to generate the soundscape audio signal.

3. The system according to claim 2, wherein randomizing the at least one sound element comprises randomly controlling one or more of the following:
basic volume and volume fluctuation;
trigger density;
random sound material selection;
an initial position in space and a spatial movement speed/Doppler effect; and
an interval distance.

4. The system according to claim 2, wherein the at least one speaker comprises a multi-channel speaker, and each of the at least one sound element is arranged at a corresponding virtual location in the 2D or 3D direction based on the known channel orientation of the multi-channel speaker.

5. The system according to claim 4, wherein the mixed audio signal comprises at least two channels, which are respectively played through corresponding channels of the multi-channel speaker.

6. The system according to claim 1, wherein the audio source signal comprises at least one of music, movies, broadcasts, navigations, prompt tones and alarm tones.

7. The system according to claim 1, wherein the sensor module comprises:
at least one interior sensor for acquiring sensor data inside the vehicle; and
at least one exterior sensor for acquiring sensor data outside the vehicle.

8. The system according to claim 7, wherein the at least one interior sensor comprises at least one of an interior camera and an interior microphone.

9. The system according to claim 7, wherein the at least one exterior sensor comprises at least one of an exterior camera, an exterior microphone, a windshield sensor, a GPS sensor, a speedometer and a proximity sensor.

10. The system according to claim 1, wherein, based on an approaching vehicle or obstacle detected via the proximity sensor, the soundscape audio signal in the direction/position towards the vehicle or obstacle is muted.

11. A method for enhancing in-vehicle acoustic experience, comprising following steps:
obtaining and transmitting, by a sensor module, sensor data;
providing, via an in-vehicle entertainment module, an audio source signal;
receiving, by a soundscape generation module, the sensor data from the sensor module, and generating a soundscape audio signal with reference to the sensor data; and
playing, by at least one speaker, a mixed audio signal formed by mixing the generated soundscape audio signal with the audio source signal.

12. The method according to claim 11, wherein generating the soundscape audio signal with reference to the sensor data comprises:
analyzing the sensor data to determine a scene, thereby selecting a plurality of sound materials for the scene and generating at least one sound element; and
randomizing and fusing in-layers the at least one sound element, so as to generate the soundscape audio signal.

13. The method according to claim 12, wherein randomizing the at least one sound element comprises a step of randomly controlling one or more of the following:
basic volume and volume fluctuation;
trigger density;
random sound material selection;
an initial position in space and a spatial movement speed/Doppler effect; and
an interval distance.

14. The method according to claim 12, wherein the at least one speaker comprises a multi-channel speaker, and each of the at least one sound element is arranged at a corresponding virtual location in the 2D or 3D direction based on the known channel orientation of the multi-channel speaker.

15. A non-volatile computer-readable medium storing instructions, wherein the instructions, when executed by one or more processors, cause the one or more processors to execute the method according to any one of claims 11 to 14.
